(19) Europäisches Patentamt
European Patent Office
Office européen des brevets

(11) **EP 2 161 612 A1**

(12) **EUROPEAN PATENT APPLICATION**
published in accordance with Art. 153(4) EPC

(43) Date of publication:
**10.03.2010   Bulletin 2010/10**

(51) Int Cl.:
*G02F 1/1333* (2006.01)          *G02F 1/13* (2006.01)
*G09F 9/00* (2006.01)

(21) Application number: **08777370.1**

(22) Date of filing: **19.06.2008**

(86) International application number:
**PCT/JP2008/061209**

(87) International publication number:
**WO 2009/001742 (31.12.2008 Gazette 2009/01)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **22.06.2007   JP 2007164832**

(71) Applicant: **Nishiyama Stainless Chemical Co., Ltd.
Toyonaka-shi
Osaka 561-0845 (JP)**

(72) Inventor: **NISHIYAMA, Tomohiro
Toyonaka-shi
Osaka 561-0845 (JP)**

(74) Representative: **Kloiber, Thomas et al
Vonnemann Kloiber & Kollegen
An der Alster 84
20099 Hamburg (DE)**

(54) **DISPLAY AND ITS MANUFACTURING METHOD**

(57)     Disclosed herein is a display device using a substrate cell obtained by separating a glass laminate substrate, in which two or more display regions are provided between two glass substrates, into substrate cells each having the display region by cutting. A physically-formed cut surface of the peripheral end face of the substrate cell is smoothed by subsequent chemical polishing, and the smoothed peripheral end face becomes flattened so that an area ratio R determined by the following formula is less than 1.2: $R = S/S_0$, where So is a virtual flat reference area set to 600 $\mu m^2$ or more in an X-Y plane orthogonal to the front face of the substrate cell and S is a judgment area calculated in a measurement region, defined by the outline of the flat reference area So, in the peripheral end face. The judgment area is a surface area calculated by determining a height $T(i,j)$ in a direction orthogonal to the X-Y plane over the entire measurement region divided into n divisions in the X-direction at a pitch h of 90/1024 $\mu m$ and m divisions in the Y-direction at a pitch v of 67/768 $\mu m$ and by approximating the surface irregularities of the measurement region by trapezoids. The mechanical strength of the display device of the present invention can be maximally enhanced without particularly changing its production efficiency and production cost.

Fig. 1

Polishing method in which a substrate cell is additionally polished in a state where the entire surface thereof is exposed

(a) Substrate cell separated from a glass laminate substrate having a thickness larger than a target thickness T by cutting

T+α

Polish the entire substrate cell

(b) Substrate cell having a target thickness T

T

**Description**

TECHNICAL FIELD

The present invention relates to a display device using a glass laminate substrate whose thickness has been reduced to 1.0 mm or less and having a maximally-enhanced mechanical strength.

BACKGROUND ART

The term "flat panel display" (hereinafter, referred to as a FPD) is used in contrast with display devices having a curved surface such as a cathode ray tube of a CRT display. A FPD is **characterized in that** it has a small thickness and a small footprint and its display panel does not have a curved surface. Examples of such a FPD in practical use include liquid crystal displays, plasma displays, and organic EL displays. Among these FPDs, liquid crystal displays are particularly widely used not only as TV receivers but also as display devices for mobile phones and computers.

Recently, in order to respond demands for reduction in weight and thickness of liquid crystal displays, a method for maximally polishing a glass laminate substrate constituting a liquid crystal display by chemical polishing is preferably used. More specifically, the periphery of a glass laminate substrate, in which two or more display panel regions are provided between a first glass substrate and a second glass substrate bonded together, is stringently sealed, and then the glass laminate substrate is immersed in an aqueous solution containing hydrofluoric acid to reduce its thickness by chemical polishing. It is to be noted that the fifth generation glass laminate substrate is, for example, 1100 mm long and 1250 mm wide, and the sixth generation glass laminate substrate is, for example, 1500 mm long and 1850 mm wide.

Such a chemical polishing method not only has an advantage in that two or more display panels can be produced at one time but also provides high productivity because of its higher processing speed than mechanical polishing. Further, since the chemical polishing method makes it possible to maximally reduce the thickness of a glass laminate substrate, it is possible to respond demands for further reduction in thickness and weight of display panels.

The thus obtained glass laminate substrate whose thickness has been maximally reduced is separated into display panels by a physical method and/or a chemical method. As a preferred separation method, there is known a method in which a scribe line physically formed on a glass substrate using a wheel cutter or the like is polished in the thickness direction by chemically polishing the glass substrate and the glass substrate is finally cut along the scribe line (e.g., Patent Document 1).

Patent Document 1: Japanese Patent Application Laid-open No. 2004-307318

DISCLOSURE OF THE INVENTION

PROBLEMS TO BE SOLVED BY THE INVENTION

According to the separation method disclosed in Patent Document 1, it is possible to produce a display device superior in mechanical strength to a display device produced by a physical cutting method. However, liquid crystal display devices for mobile phones having many opportunities to be touched by human fingers are required to have much higher mechanical strength, but enhancement of mechanical strength involving a significant increase in production cost makes no sense.

In order to respond the above requirements, it is an object of the present invention to provide a display device having a maximally-enhanced mechanical strength without particularly changing its production cost.

MEANS FOR SOLVING THE PROBLEMS

In order to achieve the above object, the present inventor has conducted repeated studies by carrying out various experiments. As a result, the present inventor has found that (a) a physically-formed cut surface has a great influence on mechanical strength even when chemical polishing is subsequently performed, (b) mechanical strength can, however, be significantly enhanced by smoothing the cut surface to a predetermined level, and (c) there is little point in further smoothing the cut surface having been smoothed to a predetermined level, and these findings have led to the completion of the present invention.

More specifically, the present invention is directed to a display device using a substrate cell obtained by separating a glass laminate substrate, in which two or more display regions are provided between two glass substrates, into substrate cells each having the display region by cutting, wherein the peripheral end face of the substrate cell is smoothed by subsequent chemical polishing processing to smooth a physically-formed cut surface, and wherein the smoothed peripheral end face becomes flattened so that an area ratio R determined by the following formula is less than 1.2: $R = S/S_0$, where $S_0$ is a virtual flat reference area set to 600 $\mu m^2$ or more in an X-Y plane orthogonal to the front face of the substrate cell and S is a judgment area calculated in a measurement region, defined by the outline of the flat reference area So, in the peripheral end face, and wherein the judgment area is determined by the following formula (1) by measuring a height $T(i,j)$ in a direction orthogonal to the X-Y plane over the entire measurement region divided into n divisions in the X-direction at a pitch h of $90/1024$ $\mu$m and m divisions in the Y-direction at a pitch v of $67/768$ $\mu$m:

$$\text{Judgment area} = \text{So} + \text{Sv} + \text{Sh} \ \text{------ (computational formula)}$$

Sv: total sum of areas of side wall surfaces calculated in X direction (j=1 to n-1)

$$Sv = \sum_{i=0}^{m-1} \sum_{j=1}^{n-1} \left| T(i,j) - T(i,j-1) \right| * v$$

Sh: total sum of areas of side wall surfaces calculated in Y direction (i=1 to m-1)

$$Sh = \sum_{j=0}^{n-1} \sum_{i=1}^{m-1} \left| T(i,j) - T(i-1,j) \right| * h$$

So: flat reference area $So = v*h*(n*m)$

According to the present invention, the peripheral end face of the substrate cell separated from the glass laminate substrate by cutting is smoothed by chemical polishing. In order to maximally enhance mechanical strength, as described in the present invention, it is important that the peripheral end face is flattened so that the area ratio of the surface area S to the virtual reference area So orthogonal to the front face of the substrate cell (i.e., $S/S_0$) becomes less than 1.2 (preferably less than 1.15, more preferably about 1.05). By flattening (smoothing) the peripheral end face to this extent, the substrate cell can have a four-point bending strength, as measured by a four-point bending test, of 120 MPa or more.

On the other hand, even when the flatness of the peripheral end face is improved to the extent that the area ratio $S/S_0$ becomes below 1.05, the four-point bending strength is saturated when it reaches about 180 to 200 MPa. Therefore, from the viewpoint of production efficiency, it is preferred that the peripheral end face of the substrate cell is smoothed so that the area ratio $S/S_0$ becomes 1.05 or more but less than 1.20.

However, it is only necessary to substantially flatten the cut surface so that the area ratio becomes less than 1.2. The flatness of the peripheral end face is evaluated by the reference area not containing the area of a region where adhesion of foreign matter and/or alteration, which occur infrequently but inevitably, are/is observed. That is, the reference area is the area of a region for accurately evaluating the flatness of the peripheral end face, and any region having 600 $\mu$m$^2$ or more is used as such a region. However, even when the flatness of the peripheral end face is evaluated by the reference area containing the area of a region where adhesion of foreign matter and/or alteration are/is observed, little influence is exerted on the area ratio in the usual case, and substantially no influence is exerted on the four-point bending strength.

In either case, in order to enhance the four-point bending strength, it is important to eliminate surface irregularities from the peripheral end face to bring the peripheral end face close to an ideal plane. According to the present invention, a technique for eliminating the surface irregularities of the peripheral end face is not particularly limited. However, the peripheral end face can be easily smoothed by bringing the periphery of the glass substrate into contact with a polishing solution containing hydrofluoric acid.

A preferred method for producing a display device includes: separation processing for separating a glass laminate substrate, in which two or more display regions are provided between two glass substrates, into substrate cells each having the display region by cutting; and polishing processing for chemically polishing the peripheral end face of the substrate cell, separated from the glass laminate substrate by cutting, by 20 $\mu$m or more. In this production method, the polishing processing may be performed by polishing only the exposed portion of the substrate cell in a state where part of the substrate cell is covered with a masking material or by polishing the entire surface of the substrate cell without covering the substrate cell with a masking material. As described above, the peripheral end face should be polished by 20 $\mu$m or more (more preferably 30 $\mu$m or more). However, when the peripheral end face is polished by about 60 $\mu$m, mechanical strength is substantially saturated, and therefore even when the peripheral end face is further polished, mechanical strength is not so improved in spite of the fact that production efficiency is reduced. Therefore, from the viewpoint of production efficiency, the polishing amount of the peripheral end face is preferably in the range of 20 to 70 $\mu$m (more preferably in the range of 30 to 60 $\mu$m).

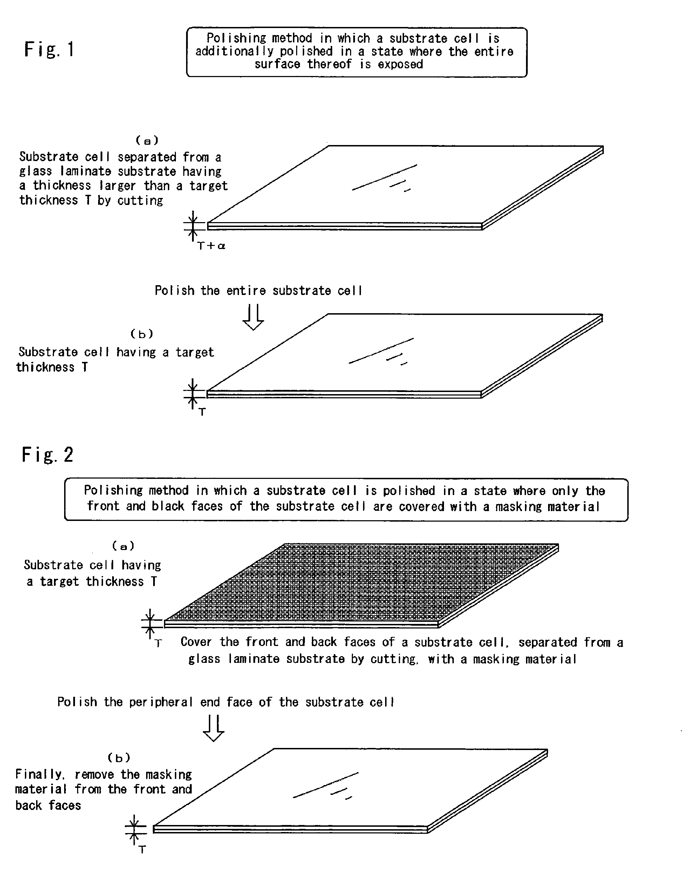

Specific examples of a polishing method include methods shown in Figs. 1 and 2. According to a polishing method shown in Fig. 1(a), a glass laminate substrate is first subjected to polishing processing to reduce the thickness of the glass laminate substrate to T + $\alpha$ enabling the glass laminate substrate to be smoothly separated into substrate cells by cutting. It is to be noted that this polishing processing is not an absolute necessity. Further, the polishing processing may be performed either by mechanical polishing or chemical polishing.

In either case, the glass laminate substrate whose thickness has been reduced to T + $\alpha$ is separated into substrate cells by cutting. A method for separating the glass laminate substrate into substrate cells by cutting is not particularly limited either, and the glass laminate substrate may be mechanically cut using a cutter or may be cut using laser light. Then, the entire surface of the substrate cell having a thickness of T + $\alpha$ is chemically polished until the thickness of the substrate cell is reduced to a target thickness T. The target thickness T is a final thickness of the substrate cell, and is preferably 1.00 mm or less. The excess thickness $\alpha$ to be finally removed by chemical polishing is not particularly limited, but by setting $\alpha$ to 40 to 200 $\mu$m, it is possible to polish the peripheral end face by 20 to 100 $\mu$m, thereby allowing the substrate cell to have a desired mechanical strength.

More specifically, it has been experimentally confirmed that by setting the polishing amount of the peripheral end face to 20 to 100 $\mu$m, it is possible to flatten the peripheral end face so that the area ratio R of the judgment area S to the flat reference area So (i.e., R = S/$S_0$) becomes less than 1.2. However, it is not absolutely necessary to polish the peripheral end face by 100 $\mu$m that is the upper limit of the polishing amount of the peripheral end face. This is because, as described above, even when the peripheral end face is polished by 60 $\mu$m or more, the time required for processing is increased but mechanical strength is not so enhanced. It is to be noted that since the substrate cell is composed of two glass substrates, as a matter of course, a sealing material is provided in a gap formed in the peripheral end face of the substrate cell or in a space inside the substrate cell so as to exhibit sealing function against a chemical polishing solution.

On the other hand, as shown in Fig. 2, the glass laminate substrate may be separated into substrate cells by cutting after the thickness of the glass laminate substrate is reduced to a target thickness T. Also in this case, a technique for thickness reduction and a technique for separation by cutting are not particularly limited. Then, only the front and back faces, except for the peripheral end face, of each of the substrate cells are covered with a masking material. It is to be noted that the masking material is not particularly limited as long as it is excellent in adhesion to glass and has resistance to hydrofluoric acid.

Then, the periphery of the substrate cell whose front and back faces are covered with a masking material is brought into contact with a chemical polishing solution to selectively chemically polish only the peripheral end face. Also in this case, by setting the polishing amount of the peripheral end face to 20 to 100 $\mu$m, it is possible to flatten the peripheral end face so that the area ratio R of the judgment area S to the flat reference area So (i.e., R = S/$S_0$) becomes less than 1.2. Finally, the masking material is removed to obtain a completed substrate cell.

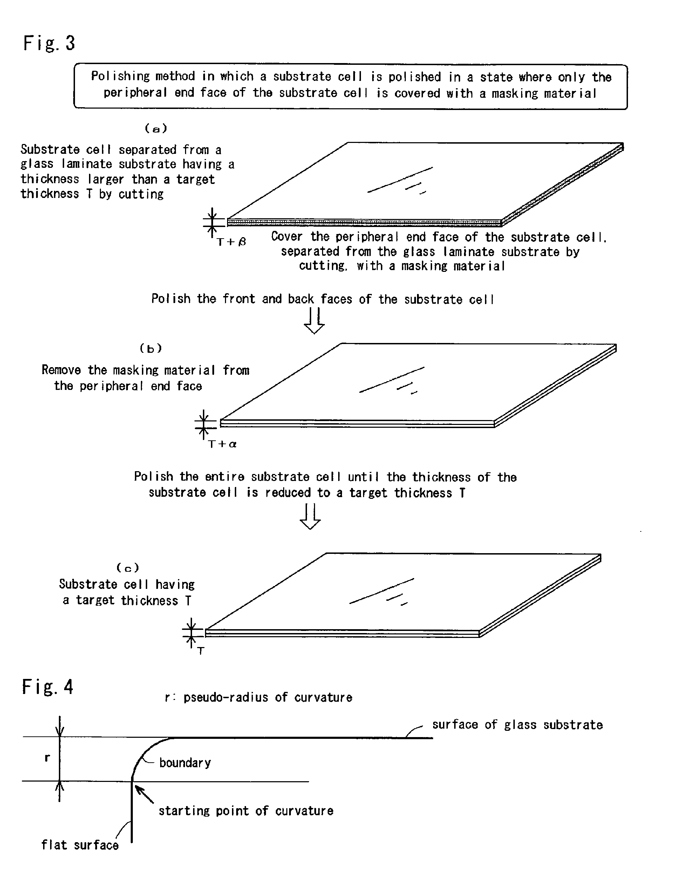

Further, a method shown in Fig. 3 can also be employed. According to this method, the glass laminate substrate is separated into substrate cells by cutting after the thickness of the glass laminate substrate is reduced to T + $\beta$. Also in this case, a technique for thickness reduction and a technique for separation by cutting are not particularly limited. Then, only the peripheral end face, except for the front and back faces, of each of the substrate cells having a thickness of T + $\beta$ is covered with a masking material. Then, the front and back faces of the substrate cell whose peripheral end face is covered with a masking material are brought into contact with a chemical polishing solution to further reduce the thickness of the substrate cell to T + $\alpha$. It is to be noted that $\alpha$ is any value representing the amount of final polishing, and therefore the value of T + $\alpha$ in the production method shown in Fig. 3 is not always the same as that in the production method shown in Fig. 1.

Then, the masking material is removed from the peripheral end face, and then the entire substrate cell is further chemically polished to obtain a substrate cell having a target thickness T.

As described above, the polishing processing in the production method according to the present invention is preferably performed by any of the methods shown in Figs. 1 to 3. That is, polishing processing in the production method according to the present invention is preferably performed by polishing the substrate cell in a state where the entire surface of the substrate cell is exposed. Alternatively, the polishing processing in the production method according to the present invention is preferably performed by selectively polishing only the peripheral end face of the substrate cell in a state where the front and back faces of the substrate cell are covered with a masking material.

Meanwhile, when the peripheral end face is flattened by the production method described above so that the area ratio R of the judgment area S to the flat reference area So (i.e., R = S/$S_0$) becomes less than 1.2, the boundary between the peripheral end face of the substrate cell and the outer surface of the glass substrate has a pseudo-radius of curvature r of 15 $\mu$m or more. Here, the pseudo-radius of curvature r takes into consideration the fact that a chemically-polished surface does not have a perfect arc shape, and as shown in Fig. 4, the pseudo-radius of curvature r means a value determined by measuring, in a direction orthogonal to the front face of the glass substrate, the distance of the boundary from the starting point of curvature to the end point of curvature in the flat peripheral end face. It is to be noted that in examples which will be described later, the pseudo-radius of curvature is measured using a laser microscope (Super-deep color 3D profile measurement microscope VK-9500 series manufactured by KEYENCE) operated based on laser confocal principles.

The pseudo-radius of curvature r is preferably 20 $\mu$m or more, more preferably 30 $\mu$m or more. However, mechanical strength is hardly increased even when polishing is continued until the pseudo-radius of curvature becomes 50 $\mu$m or more. Therefore, from the viewpoint of production efficiency, the pseudo-radius of curvature is preferably in the range of 15 to 50 $\mu$m.

As a result of study by the present inventor, it has been found that a glass torn surface of the peripheral end face of the glass substrate is usually very flat and has no adverse effect on mechanical strength. Therefore, according to the present invention, the peripheral end face of the substrate cell does not always need to be fully smoothed. Further, even when the production method described in Patent Document 1 is employed, sufficiently high mechanical strength can be achieved as long as a scribe line is smoothed to a predetermined level.

More specifically, the display device according to the present invention can be produced by carrying out, in the order listed below, a first step in which when a glass laminate substrate, in which two or more display regions are provided between a first glass plate to be exposed to a user and a second glass plate not to be exposed to a user, has a thickness larger than a final thickness by 80 to 200 $\mu$m, a cut line is formed in the outer surface of the second glass plate, a second step in which, in a state where the periphery of the glass laminate substrate is sealed, the glass laminate substrate is chemically polished until the thickness of the glass laminate substrate is reduced to a final thickness while the cut line is also chemically polished, and a third step in which a load is applied to the cut line from the outer surface side of the first glass plate to form a glass torn surface to separate the glass laminate substrate into substrate cells each having the display region by cutting.

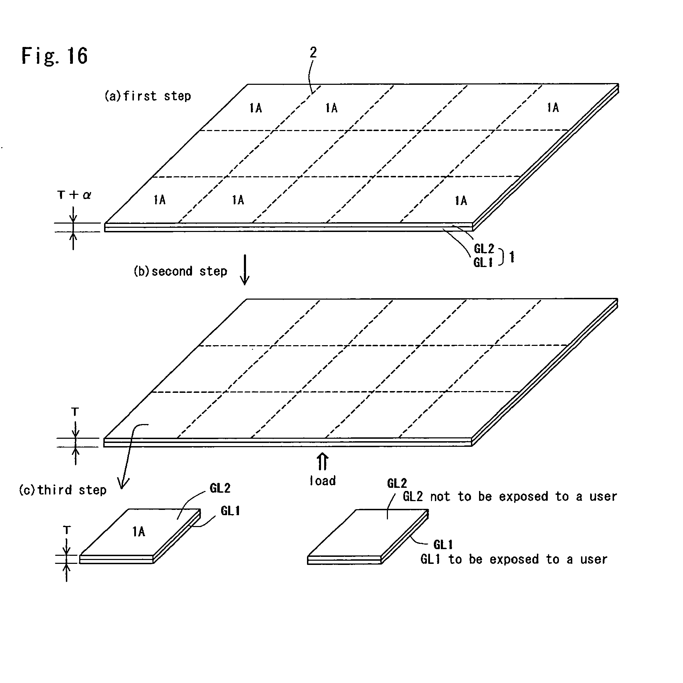

Fig. 16 is an illustration for explaining this production method. In the first step, when a glass laminate substrate 1, in which two or more display regions 1A $\cdots$ 1A are provided between a first glass plate GL1 to be exposed to a user and a second glass plate GL2 not to be exposed to a user, has a thickness larger than a final thickness T by 80 to 200 $\mu$m (i.e. , thickness = T + $\alpha$), a cut line (scribe line) 2 is formed in the outer surface of the second glass plate GL2.

Then, in the second step, in a state where the periphery of the glass laminate substrate 1 is sealed, the glass laminate substrate 1 is chemically polished until the thickness of the glass laminate substrate 1 is reduced to a final thickness T while the cut line 2 is also chemically polished. In this second step, the thickness of the glass laminate substrate 1 is reduced by $\alpha$ in the thickness direction ($\alpha/2$ per one glass substrate), but the cut line orthogonal to the thickness direction is polished by only about $\alpha/4$. Therefore, a polishing amount in the direction in which the plate surface extends (i.e., in a direction orthogonal to the thickness direction) is significantly smaller as compared to the polishing method shown in Fig. 1.

In the third step, a load is applied to the cut line 2 from the outer surface side of the first glass plate GL1 to form a glass torn surface to separate the glass laminate substrate into substrate cells each having the display region 1A by cutting.

According to this production method, only the peripheral end face of the glass plate GL2 not to be exposed to a user of the substrate cell is smoothed. Therefore, after the completion of the third step, the peripheral end face of the substrate cell has a smooth surface portion smoothed by chemical polishing and a glass torn surface extending from the smooth surface portion in the thickness direction. According to this production method, it is particularly preferred that the peripheral end face is chemically polished by 20 $\mu$m or more by chemically polishing the glass laminate substrate by 80 to 200 $\mu$m and that the boundary between the smooth surface portion and the outer surface of the glass plate has a pseudo-radius of curvature of 20 $\mu$m or more.

Here, in a case where the flat reference area So is measured at the middle position of any of the peripheral four sides of the substrate cell, the area ratio R ($S/S_0$) at this middle position is less than 1.2. Further, the substrate cell can have a four-point bending strength, as measured by applying a load to the glass substrate GL1 to be exposed to a user according to JIS R 1601, of 100 MPa or more.

As the glass plate to be used in the present invention, an aluminosilicate glass plate or a borosilicate glass plate can be used. An aluminoborosilicate glass plate may also be used. However, the glass plate preferably has the following composition: $SiO_2$ 55 to 60 wt%, $Al_2O_3$ 16 to 18 wt%, $B_2O_3$ 8 to 10 wt%, SrO 1.5 to 6 wt%, CaO 3.5 to 5.0 wt%, and BaO 2.2 to 9.0 wt%.

The chemical polishing solution is not particularly limited, but an aqueous solution having a hydrofluoric acid content of 10 to 30 wt% and a sulfuric acid content of 20 to 50 wt% is preferably used to enhance operating efficiency while maintaining a polishing rate at a certain level. On the other hand, in order to improve polishing quality, the hydrofluoric acid content of the aqueous solution should be reduced to less than 10 wt%, preferably about 0.5 to 5 wt%. However, in this case, it is necessary to increase the sulfuric acid content of the aqueous solution to about 50 to 90 wt%.

In either case, the polishing solution may contain one or two or more of inorganic acids and surfactants. Examples of the inorganic acids include hydrochloric acid, nitric acid, and phosphoric acid. Examples of the surfactants include ester-, phenol-, amide-, ether-, and amine-based surfactants.

EFFECT OF THE INVENTION

According to the present invention, it is possible to realize a display device having a maximally-enhanced mechanical strength without particularly changing its production efficiency and production cost.

BEST MODE FOR CARRYING OUT THE INVENTION

Hereinbelow, the present invention will be described in more detail based on the following examples, but the following description is not intended to limit the present invention.

Example 1

<Chemical Polishing and Separation by Cutting>

A glass laminate substrate having an initial thickness of 1.4 mm was chemically polished until the thickness of the glass laminate substrate was reduced to 1.0 mm in a state where the periphery of the glass laminate substrate was sealed. As a chemical polishing solution, an aqueous solution whose hydrofluoric acid (HF) content was less than 10 % was used. During chemical polishing, the glass laminate substrate was allowed to stand upright in a resting state in a polishing bath generating micro air bubbles traveling upward.

The composition of a glass substrate used for the glass laminate substrate is as follows: $SiO_2$ 57.8 wt%, $Al_2O_3$ 17.5 wt%, $B_2O_3$ 9.3 wt%, SrO 5.5 wt%, CaO 4.5 wt%, and BaO 3.8 wt%.

The glass laminate substrate was washed with water and dried, and then the glass substrate was cut using a wheel cutter having an outer diameter of 3.2 mm. More specifically, a scribe line was formed in the outer surface of a TFT-side glass substrate, on which a transistor (TFT) had been provided, by applying a scribing load of about 1.8 kgw thereto, and a scribing load of about 1.3 kgw was applied to the surface of a CF-side glass substrate, on which a color filter (CF) had been provided, at a position corresponding to the scribe line to separate the glass laminate substrate into substrate cells by cutting. The thus obtained substrate cell was a 2.6-inch liquid crystal panel (42 × 55 mm).

<Masking and Polishing of Peripheral End Face>

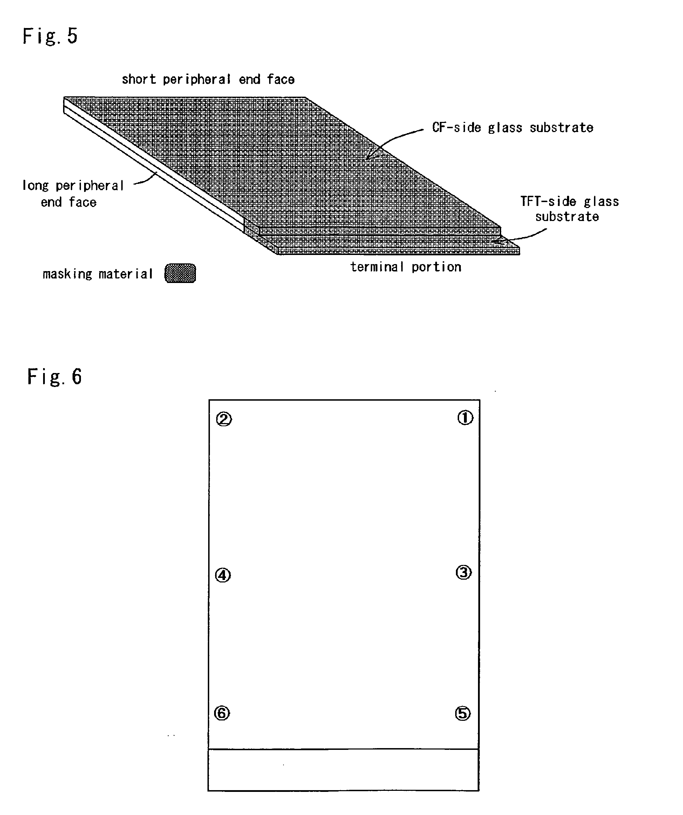

As shown in Fig. 5, all the exposed faces of the substrate cell except for long peripheral end faces were subjected to masking. More specifically, the front face of the substrate cell, the back face of the substrate cell, all the faces of a terminal portion of the substrate cell, and the short peripheral end faces of the substrate cell were covered with a masking material. The substrate cell masked in this way was immersed in a chemical polishing solution to polish the long peripheral end faces not covered with the masking material. The chemical polishing solution was an aqueous solution whose hydrofluoric acid (HF) content was less than 10 %. During chemical polishing, the glass laminate substrate was allowed to stand upright in a resting state in a polishing bath generating micro air bubbles traveling upward.

The target values of polishing amount of one peripheral end face were set to 20 μm, 30 μm, 45 μm, 60 μm, 95 μm, 120 μm, 160 μm, and 180 μm, and polishing processing was carried out for a previously-determined period of time corresponding to each of the 8 target values. Then, the substrate cells were washed with water and dried, and then the masking material was removed to complete polishing processing. The number of samples was 24 (3 samples per target value), and each of the samples was a liquid crystal cell having dimensions of 42 mm × 55 mm × 1 mm.

<Polishing Amount of Peripheral End Face>

Prior to polishing processing, a reference line was provided on the front face of the substrate cell, and the polishing amount of the peripheral end face was measured based on a distance from the reference line to a finally-obtained peripheral end face. Measurement points are indicated by numerals (1) to (6) in Fig. 6. More specifically, measurement points are located at both ends and the middle of each long side (55 mm) of the substrate cell (42 × 55 mm). It is to be noted that polishing amounts measured at 6 points vary from place to place even in the same sample with respect to a target value.

<Measurement of Cut Surface>

The profile of the cut surface of each of the liquid crystal cell samples was measured at two points using a laser microscope (Super-deep color 3D profile measurement microscope VK-9500 series manufactured by KEYENCE).

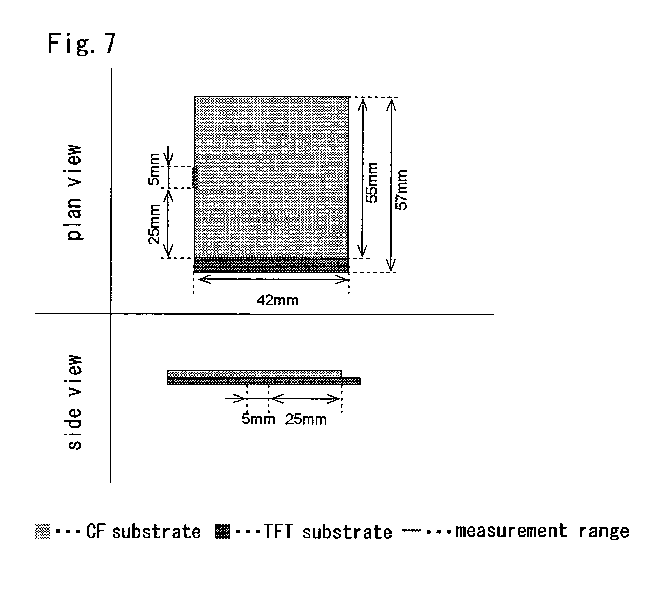

As shown in Fig. 7, the profile of the cut surface was measured at the middle position between fulcrums to determine the area ratio of the peripheral end face. This is because it can be considered that the liquid crystal cell is most easily bent at its middle position and therefore the middle portion of the liquid crystal cell has the largest influence on the mechanical strength of the liquid crystal cell. More specifically, the profile of the cut surface was measured within a range having a length of 0.09 mm located at the middle position of the long side (55 mm) of the TFT-side glass substrate of the liquid crystal cell (42 mm × 55 mm). The magnification of an objective lens used for measurement by the laser microscope was 150x. It is to be noted that display resolution for height measurement and width measurement is 0.01 $\mu$m and a height is measured in increments of 0.01 $\mu$m.

(1. Observation/Measurement Range)

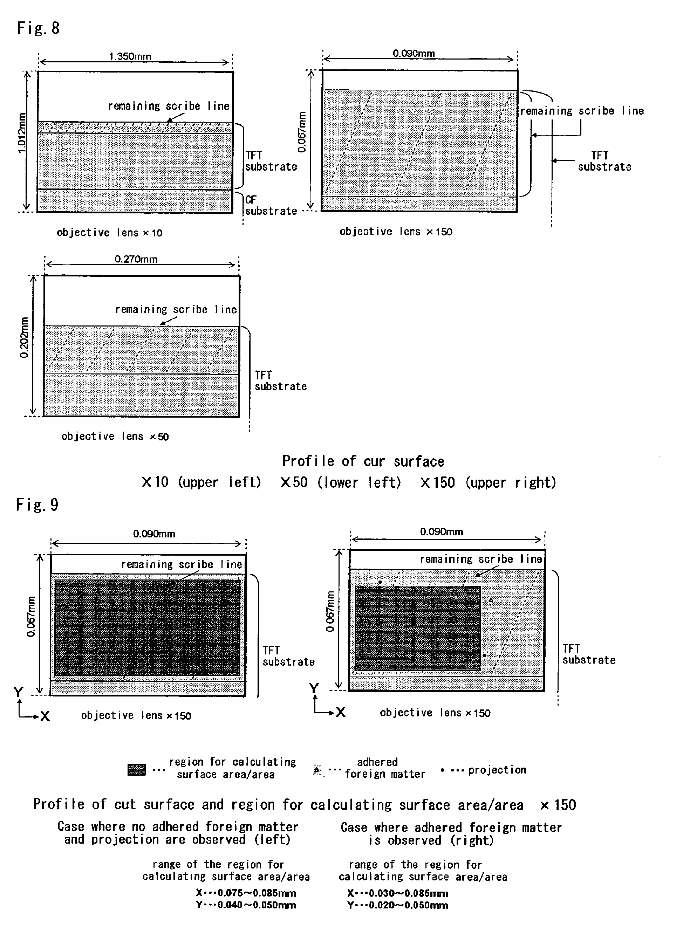

When the magnification of objective lens of a laser microscope (Super-deep color 3D profile measurement microscope VK-9500 series manufactured by KEYENCE) is set to 150x, an observation/measurement range has a width of 90 $\mu$m (X direction) and a length of 67 $\mu$m (Y direction). Further, the display resolution is 1024 (X direction) × 768 (Y direction) (see Fig. 8).

Therefore, three-dimensional coordinates are determined at a pitch of 90/1024 $\mu$m in the X-direction and a pitch of 67/768 $\mu$m in the Y-direction in the observation/measurement range having a width of 90 $\mu$m in the X-direction and a length of 67 $\mu$m in the Y-direction. The measurement principles of this laser microscope are described in the KEYENCE's brochure as follows: the laser microscope scans one horizontal plane (1024 × 768 pixels) with laser, and then the lens is moved in the Z-axis direction by a micro step to scan another horizontal plane, which is repeated within the measurement range to detect a Z-axis focal position in each of the 1024 × 768 pixels.

(2. Selection of Measurement Region in Observation/Measurement Range)

A measurement region is arbitrarily selected within the observation/measurement range (90 $\mu$m × 67 $\mu$m), and a judgment area (i.e., a pseudo-surface area of the measurement region) is calculated based on height information (Z-axis coordinate value, T(i,j)) of dots (measurement points) present at a pitch of 90/1024 $\mu$m in the X-direction and a pitch of 67/768 $\mu$m in the Y-direction.

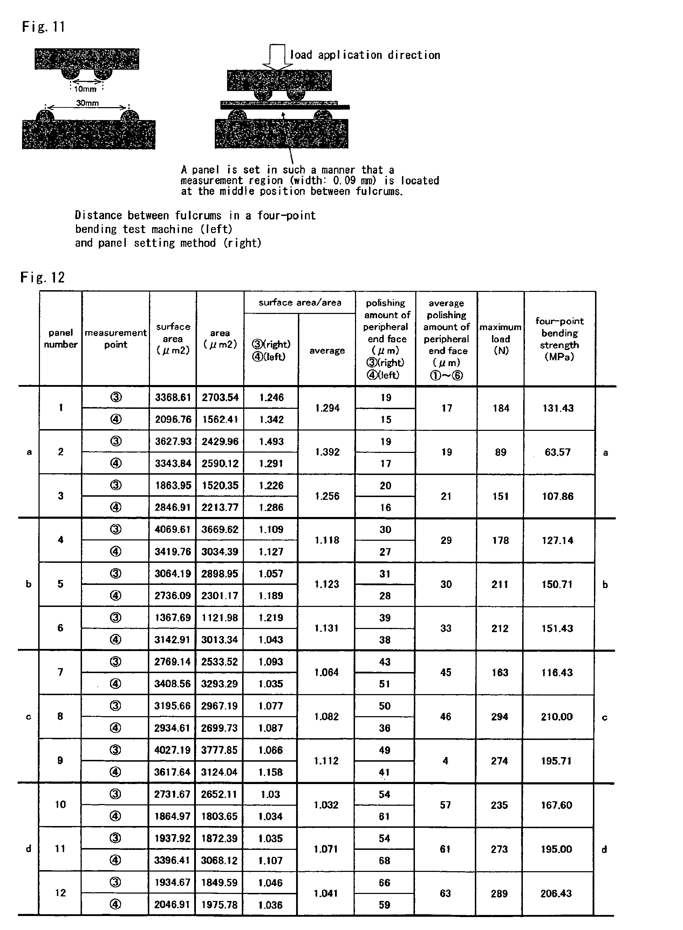

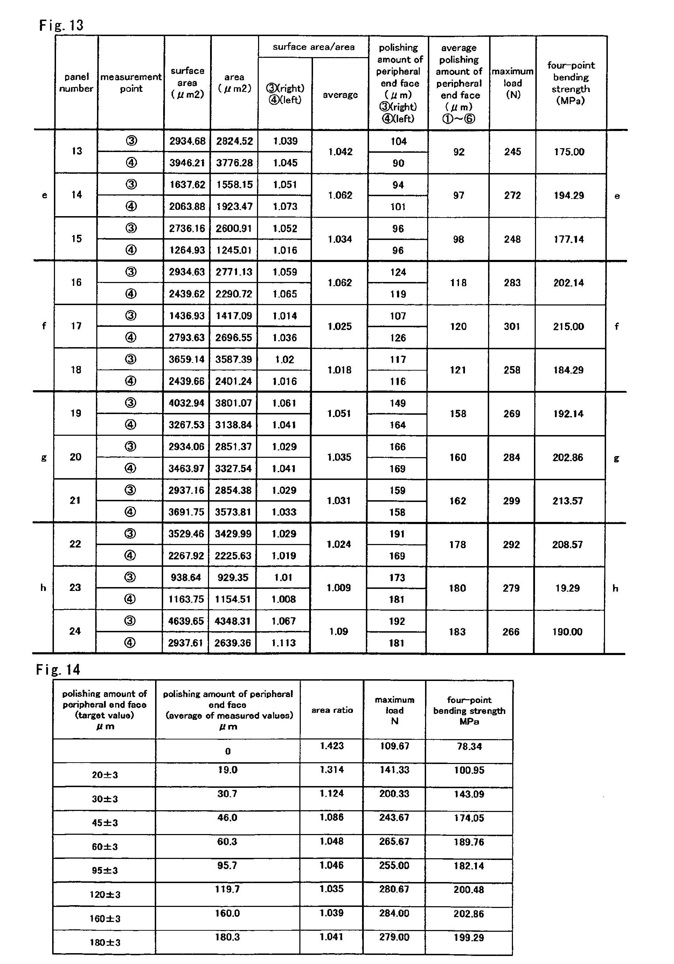

As described above, the measurement region can be arbitrarily selected. However, from the viewpoint of making the measurement region as large as possible and accurately measuring surface irregularities of the peripheral end face, each measurement region was individually selected. More specifically, a region where adhered foreign matter and/or a projection observable on the microscope screen were/was present was excluded from the measurement region because there is a possibility that such adhered foreign matter and/or a projection will have adverse effects on digitization of surface irregularities (see Fig. 9). For this reason, as shown in Figs. 12 and 13 showing measurement results, the area of the measurement region (i.e., the flat reference area $S_0$) is different from measurement point to measurement point. It is to be noted that the area of the measurement region was set to 600 $\mu$m$^2$ or more in order to accurately digitize the surface irregularities of the peripheral end face.

In this way, the measurement region was selected, and a virtual flat reference area So of 600 $\mu$m$^2$ or more was determined on the X-Y plane, orthogonal to the front face of the liquid crystal cell, in the peripheral end face of the liquid crystal cell.

(3. Calculation of Judgment Area (Pseudo-Surface Area of Measurement Region)

In order to determine the area ratio (= judgment area/flat reference area $S_0$), the judgment area S (pseudo-surface area) of the measurement region was measured using a VK 9500-specific profile analysis application VK-HIA9 (manufactured by KEYENCE).

According to the manual of VK 9500-specific profile analysis application VK-HIA9, an algorithm for calculating the pseudo-surface area S is as follows.

(1) Measurement Value T(i,j)

A height T(i,j) in a direction (Z direction) orthogonal to the X-Y plane is measured in the measurement region, defined by the outline of the flat reference area So appropriately set in the peripheral end face of the liquid crystal cell, at each of the n * m measurement points present at a pitch of h (= 90/1024 $\mu$m) in the X-direction and a pitch of v (=

67/768 $\mu$m) in the Y-direction.

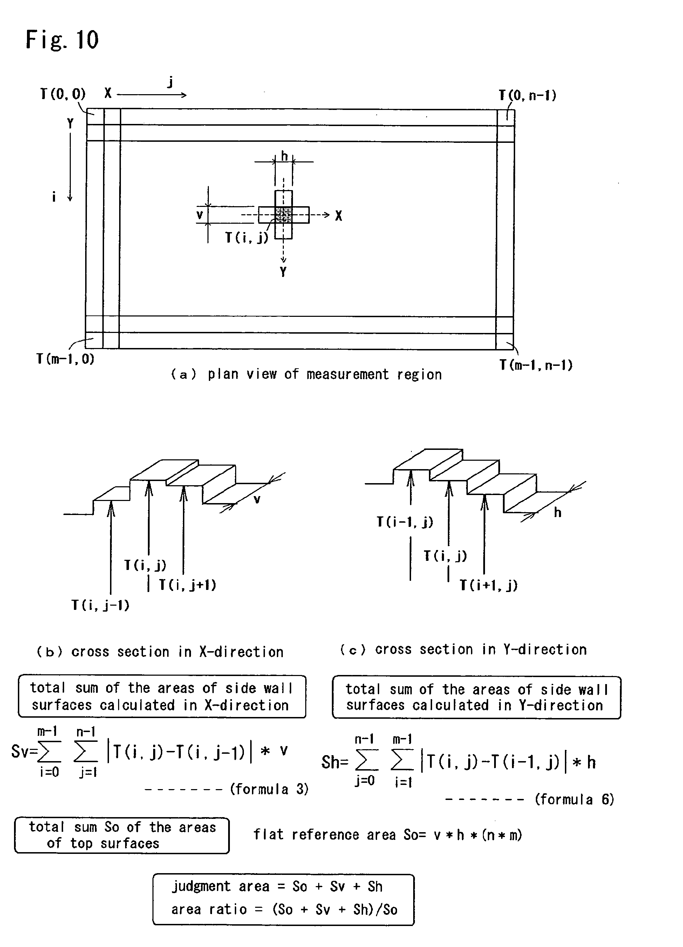

Fig. 10(a) shows a plan view of the measurement region in which n measurement points are present in the X-direction and m measurement points are present in the Y-direction (i.e., n * m measurement points are present in total). The measurement result is represented as T(i,j), wherein j = 0 to n-1 (X-direction) and i = 0 to m-1 (Y-direction), and a total of n * m data can be obtained as a matrix with m rows and n columns. It is to be noted that each measurement point is defined as an entire rectangular region having a length of v and a width of h (i.e., v * h).

Fig. 10(b) shows a difference in height between a measurement point (i,j) at the i-th row and the j-th column and its adjacent measurement points. As shown in Fig. 10 (b), a change in height in the X-direction is measured as the measurement point is shifted in the following manner: T(i, j-1)→T(i,j)→T(i, j + 1). On the other hand, as shown in Fig. 10 (c), a change in height in the Y-direction is measured as the measurement point is shifted in the following manner: T(i-1, j)→ T(i,j)→ T(i + 1, j).

(2) Total Sum Sv of Side Wall Areas in X-Direction Among all the n * m measurement points (pixels) present at the above-described pitch and having a unit area of h * v, attention is given to measurement points in the i-th row. The total sum Sv(i) of side wall areas of the measurement points in the i-th row in the X-direction is determined by the following formula (1):

$$Sv(i) = \sum [T(i,j)-T(i,j-1)]*v \cdots (1)$$

It is to be noted that in the formula (1), the symbol $\Sigma$ means summation from j=1 to n-1, and the symbol [ ] represents the absolute value.

When the total sum Sv(i) calculated by the formula (1) is summed up from i=0 to m-1, the total sum Sv of side wall areas determined by scanning all the n * m measurement points in the X-direction is calculated by the following formula (2):

$$Sv =$$

$$\sum Sv(i) \cdots (2)$$

It is to be noted that in the formula (2), the symbol $\Sigma$ means summation from i=0 to m-1.

As shown in Fig. 10, the formula (1) and the formula (2) can be combined into a single formula (3).

(3) Total Sum Sh of side wall areas in Y-direction

Then, among all the n * m measurement points (pixels), attention is given to measurement points in the j-th column. The total sum Sh(j) of side wall areas of the measurement points in the j-th column in the Y-direction is calculated by the following formula (4):

$$Sh(j) = \sum [T(i,j)-T(i-1,j)]*h \cdots (4)$$

It is to be noted that in the formula (4), the symbol $\Sigma$ means summation from i=1 to m-1, and the symbol [ ] represents the absolute value.

When the total sum Sh(j) calculated by the formula (4) is summed up from j=0 to n-1, the total sum Sh of side wall areas determined by scanning all the n * m measurement points in the Y-direction is calculated by the following formula (5):

$$Sh =$$

$$\Sigma Sh(j) \cdot \cdot \cdot (5)$$

It is to be noted that in the formula (5), the symbol $\Sigma$ means summation from j=0 to n-1.

As shown in Fig. 10, the formula (4) and the formula (5) can be combined into a single formula (6). Sv calculated by the formula (3), Sh calculated by the formula (6), and the total area So as the sum of the areas of top surfaces of all the n * m measurement points are summed up to determine the judgment area S (= So + Sv + Sh). It is to be noted that the total area So as the sum of the areas of the top surfaces can be determined by calculating the total area of the n * m planar pixels (v * h * n * m). The thus determined total area is none other than the area of a flat reference surface.

In the above computational algorithm, the surface area of the measurement region is calculated by approximating all the pixels by prisms to approximate the surface irregularities of the peripheral end face by step-like surface irregularities. Therefore, the surface area calculated using this algorithm becomes larger than the actual surface area, but it can be considered that the surface area calculated by this algorithm can be used as an index for numerically evaluating the surface irregularities of the peripheral end face without any problem.

(4) Area Ratio

As described above, the judgment area S is calculated by So + Sv + Sh, and then the area ratio $S/S_0$ is finally determined.

<Strength Test>

A four-point bending test (see Fig. 11) was performed on each of the samples by a test method according to JIS R 1601, and four-point bending strength $\sigma$ was calculated by the following formula: Four-point bending strength $\sigma$ = 3P (L-1) / (2Wt$^2$), where P is maximum load, L is distance between fulcrums (30 mm), 1 is distance between fulcrums (10 mm), W is width of test specimen, and t is thickness of test specimen.

The four-point bending test was performed by applying a load to the CF-side glass substrate in a state where the TFT-side glass substrate was located on the lower side of the CF-side glass substrate. Based on the measured maximum load P, four-point bending strength was calculated by the following formula: $\sigma$ = 3P(L-1)/(2Wt$^2$). The test specimen width W was 42 mm, L-1 was 20 mm, and the test specimen thickness t was 1 mm.

<Measurement Result>

Figs. 12 and 13 provide a summary of the experimental results of the 24 liquid crystal cell samples (42 $\times$ 55 $\times$ 1 mm) . As described above, 24 samples (42 $\times$ 55 $\times$ 1 mm) were divided into 8 groups (a to h) each containing 3 samples, and the target values of polishing amount of one peripheral end face of the 8 groups were set to 20, 30, 45, 60, 95, 120, 160, and 180 $\mu$m, respectively.

In Figs. 12 and 13, the surface area (judgment area S), the area (flat reference area $S_0$), and the area ratio ($S/S_0$) measured at the middle position of each of the two long peripheral end faces of each of the 24 samples are listed. In addition, the average value of the area ratios ($S/S_0$) of each of the samples is also listed.

The actual polishing amount measured at the middle position of each of the two long peripheral end faces of each of the 24 samples and the average value of the actual polishing amounts measured at all the 6 positions (including the 2 middle positions) of each of the 24 samples are also listed.

The maximum load N of each of the 24 samples was determined by the four-point bending test, and the four-point bending strength MPa was calculated by the following formula:

$$\text{Four-point bending strength } \sigma = 3P(L-1)/(2Wt^2).$$

Fig. 14 provides a summary of the experimental results shown in Figs. 12 and 13. In Fig. 14, the average values of the experimental results of the 3 samples of each of the groups are listed. More specifically, Fig. 14 shows the average value of polishing amounts of the peripheral end face measured at 18 positions, the average value of area ratios measured at 6 positions, and the average value of maximum loads measured at 6 positions of the 3 samples of each of the groups whose target values of polishing amount of the peripheral end face were 20, 30, 45, 60, 95, 120, 160, and 180 $\mu$m, respectively. The four-point bending strength was calculated using the average value of maximum loads and the following formula: Four-point bending strength $\sigma$ = 3P(L-1)/(2Wt$^2$).

On the other hand, the judgment area S, flat reference area So, and area ratio $S/S_0$ of each of 3 samples whose polishing amount of the peripheral end face was zero were also determined, and only the area ratio $S/S_0$ was shown in Fig. 14. These 3 samples are also liquid crystal cells ($42 \times 55 \times 1$ mm) obtained by chemically polishing a glass laminate substrate having a thickness of 1.4 mm until the thickness of the glass laminate substrate is reduced to 1.0 mm and then separating it into substrate cells by cutting, and have the same glass composition as the above-described 24 samples.

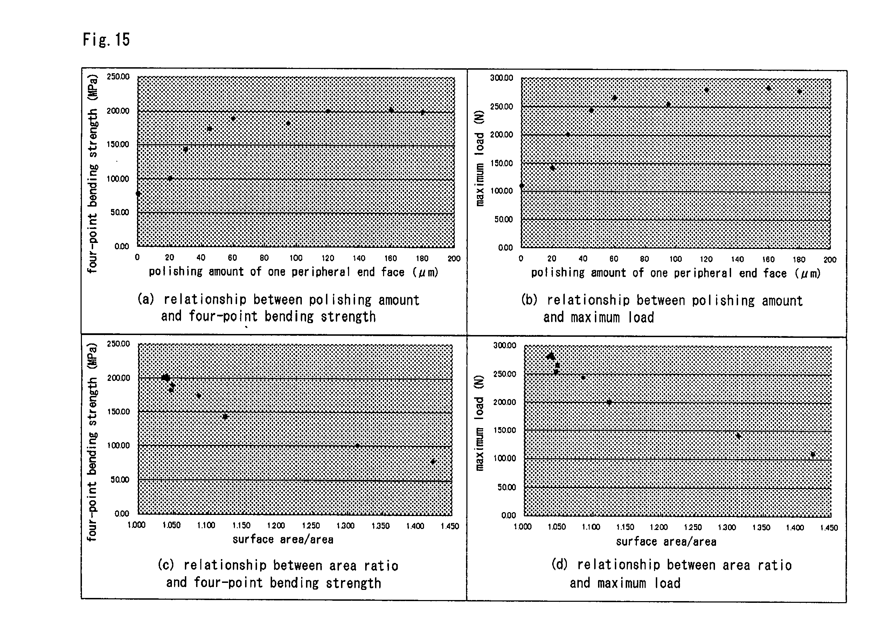

Fig. 15 provides graphs based on the results shown in Figs. 12 and 13. Fig. 15(a) shows the relationship between the polishing amount of the peripheral end face and the four-point bending load, Fig. 15(b) shows the relationship between the polishing amount of the peripheral end face and the maximum load, and Fig. 15(c) shows the relationship between the area ratio and the four-point bending load, and Fig. 15(d) shows the relationship between the area ratio and the maximum load.

As can be seen from Fig. 15, the four-point bending strength is significantly increased when the area ratio reaches 1.20. Further, mechanical strength is further enhanced by smoothing the peripheral end face so that the area ratio becomes less than 1.15, but the four-point bending strength is not so improved even when the polishing amount is increased to the extent that the area ratio becomes less than 1.05. From the result, it has been confirmed that it is only necessary to polish the peripheral end face so that the area ratio becomes less than 1.2 (preferably less than 1.15, more preferably about 1.05), and further polishing is not very necessary.

Further, the relationship between the polishing amount of the peripheral end face and the four-point bending strength indicates that mechanical strength is enhanced when the polishing amount of the peripheral end face is 20 $\mu$m or more, but mechanical strength becomes saturated when the polishing amount of the peripheral end face reaches about 60 $\mu$m.

Meanwhile, the pseudo-radius of curvature of the boundary (see Fig. 4) of each of some of the samples was measured using a laser microscope (Super-deep color 3D profile measurement microscope VK-9500 series manufactured by KEYENCE). As a result, the pseudo-radiuses of curvature r of the samples whose polishing amount of the peripheral end face was 30 $\mu$m were in the range of 16. 70 to 19.19 $\mu$m, the pseudo-radiuses of curvature r of the samples whose polishing amount of the peripheral end face was 60 $\mu$m were in the range of 29.07 to 29.96 $\mu$m, and the pseudo-radiuses of curvature r of the samples whose polishing amount of the peripheral end face was 90 $\mu$m were in the range of 40.42 to 41.46 $\mu$m. From both the measurement results of the pseudo-radius of curvature and the graphs shown in Fig. 15, it has been confirmed that it is preferred that the peripheral end face is polished so that the pseudo-radius of curvature r becomes 15 $\mu$m or more (preferably 20 $\mu$m or more, more preferably 30 $\mu$m or more).

Example 2

<Chemical Polishing and Separation by Cutting>

A glass laminate substrate having an initial thickness of 1.4 mm was chemically polished until the thickness of the glass laminate substrate was reduced to 1.0 mm + 60 $\mu$m in a state where the periphery of the glass laminate substrate was sealed. It is to be noted that a chemical polishing solution, glass substrates, and a polishing method used in Example 2 were the same as those used in Example 1.

The glass laminate substrate was washed with water and dried. Then, a scribe line was formed using a wheel cutter in the outer surface of a TFT-side glass substrate, on which a transistor (TFT) had been provided, by applying a scribing load of 1.0 to 1.5 kgw thereto.

Then, the glass laminate substrate was further chemically polished to reduce the thickness of the glass laminate substrate by 60 $\mu$m (30 $\mu$m per one glass substrate) in a state where the periphery of the glass laminate substrate was sealed. Then, the glass laminate substrate was pulled out of a polishing bath, and washed with water and dried. Then, a load was applied to the surface of a CF-side glass substrate, on which a color filter (CF) had been provided, at a position corresponding to the scribe line to separate the glass laminate substrate into liquid crystal cells by cutting. In this way, 2.6-inch liquid crystal panels ($42 \times 55$ mm) were obtained.

<Measurement of Cut Surface>

The profile of the cut surface was measured in the same manner as in Example 1 to determine the area ratio R of the peripheral end face of the TFT-side glass substrate. As a result, the best value of the area ratio R (S/S0) was 1.055, but the worst value of R (S/S0) was about 1.3. It is to be noted that the flat reference area S0 was measured at the middle position of any of the peripheral four sides of the TFT-side glass substrate to determine the area ratio R at this position.

<Strength Test>

A strength test was performed in the same manner as in Example 1. The best value of four-point bending strength, as measured according to JIS R 1601, was larger than 130 MPa, but the worst value was about 100 MPa.

In the case of Example 2, the polishing amount of the TFT-side glass substrate of the glass laminate substrate is 30 $\mu$m in the thickness direction, and therefore it can be expected from the previous experimental data that the polishing amount of the peripheral end face is about 15 $\mu$m which seems to be slightly insufficient.

Therefore, in order to further increase the polishing amount of the peripheral end face, an additional experiment was repeatedly carried out. As a result, the four-point bending strength was increased as the total polishing amount in the thickness direction of the glass laminate substrate having a scribe line was increased from 80 $\mu$m through 100 $\mu$m to 120 $\mu$m. From the experimental result, it has been found that it is preferred that the total polishing amount in the thickness direction is 80 $\mu$m or more and the polishing amount of the peripheral end face is 20 $\mu$m or more. However, if the polishing amount in the thickness direction is 200 $\mu$m or more, smoothing of the scribe line proceeds so that a cut groove formed along the scribe line has a U-shaped cross section, which makes it difficult to separate the glass laminate substrate into liquid crystal cells by cutting.

BRIEF DESCRIPTION OF THE DRAWINGS

Fig. 1 is an illustration for explaining a polishing method.
Fig. 2 is an illustration for explaining another polishing method.
Fig. 3 is an illustration for explaining still another polishing method.
Fig. 4 is an illustration for explaining a pseudo-radius of curvature.
Fig. 5 is an illustration for explaining a masking method.
Fig. 6 is an illustration showing the measurement points at which the polishing amount of a peripheral end face is measured.
Fig. 7 is an illustration showing the shape of a display cell used for experiment and the measurement point of an area ratio.
Fig. 8 schematically shows the profile of a cut surface.
Fig. 9 schematically shows a measurement region.
Fig. 10 is an illustration for explaining a method for calculating a pseudo-surface area.
Fig. 11 is an illustration for explaining a four-point bending test.
Fig. 12 provides a table giving a summary of experimental results.
Fig. 13 provides a table giving a summary of experimental results.
Fig. 14 provides a table giving a summary of the experimental results shown in Figs. 12 and 13.
Fig. 15 provides graphs showing the relationships between area ratio, mechanical strength, and polishing amount.
Fig. 16 is an illustration for explaining a method for separating a glass laminate substrate into panels by cutting.

**Claims**

1. A display device using a substrate cell obtained by separating a glass laminate substrate, in which two or more display regions are provided between two glass substrates, into substrate cells each having the display region by cutting, wherein the peripheral end face of the substrate cell is fully or partially smoothed in the thickness direction of the substrate cell by subsequent chemical polishing to smooth a physically-formed cut surface, and wherein the smoothened peripheral end face becomes flattened so that an area ratio R determined by the following formula is less than 1.2: $R = S/S_0$, where So is a virtual flat reference area set to 600 $\mu$m$^2$ or more in an X-Y plane orthogonal to the front face of the substrate cell and S is a judgment area calculated in a measurement region, defined by the outline of the flat reference area So, in the peripheral end face, and wherein the judgment area is calculated by the following computational formula by measuring a height T (i, j) in a direction orthogonal to the X-Y plane over the entire measurement region divided into n divisions in the X-direction at a pitch h of 90/1024 $\mu$m and m divisions in the Y-direction at a pitch v of 67/768 $\mu$m:

```
Judgment area = So + Sv +Sh -------(computational formula)
```

Sv: total sum of areas of side wall surfaces calculated in X direction (j=1 to n-1)

$$Sv=\sum_{i=0}^{m-1} \sum_{j=1}^{n-1} \left| T(i,j)-T(i,j-1) \right| * v$$

Sh: total sum of areas of side wall surfaces calculated in Y direction (i=1 to m-1)

$$Sh=\sum_{j=0}^{n-1} \sum_{i=1}^{m-1} \left| T(i,j)-T(i-1,j) \right| * h$$

So: flat reference area So = v*h*(n*m)

2. The display device according to claim 1, wherein the peripheral end face of the substrate cell is fully smoothed in the thickness direction of the substrate cell, and wherein the flat reference area So is measured at the middle position of any of the four peripheral sides of the substrate cell, and wherein when the area ratio R (= $S/S_0$) at this position is less than 1.2, the substrate cell has a four-point bending strength, as measured according to JIS R 1601, of 120 MPa or more.

3. The display device according to claim 2, wherein the boundary between the peripheral end face of the substrate cell and the outer surface of the glass substrate has a pseudo-radius of curvature of 20 $\mu$m or more.

4. The display device according to claim 1, wherein in the substrate cell, only the peripheral end face of the glass substrate not to be exposed to a user is smoothed, and wherein the flat reference area So is measured at the middle position of any of the four peripheral sides of the substrate cell, and wherein when the area ratio R (= $S/S_0$) at this position is less than 1.2, the substrate cell has a four-point bending strength, as measured by applying a load to the glass substrate to be exposed to a user according to JIS R 1601, of 100 MPa or more.

5. The display device according to claim 4, wherein the peripheral end face of the substrate cell has a smooth surface portion formed by smoothing a cut line physically formed along the periphery of the substrate cell by subsequent chemical polishing and a glass torn surface extending from the smooth surface portion in the thickness direction.

6. The display device according to claim 5, wherein the boundary between the smooth surface portion of the peripheral end face of the substrate cell and the outer surface of the glass susbtrate has a pseudo-radius of curvature of 20 $\mu$m or more.

7. The display device according to claim 1, wherein the substrate cell has a thickness of 1.0 mm or less.

8. A method for producing the display device according to claim 1, comprising: separation processing for separating a glass laminate substrate, in which two or more display regions are provided between two glass substrate, into substrate cells each having the display region by cutting; and polishing processing for chemically polishing the peripheral end face of the substrate cell, separated from the glass laminate substrate by cutting, by 20 $\mu$m or more.

9. The production method according to claim 8, wherein the separation processing is performed by irradiating the glass laminate substrate with laser light along a cut line.

10. The production method according to claim 8, wherein the separation processing is performed by applying pressure to a recess groove formed along a cut line provided in the glass laminate substrate, and wherein the recess groove is formed by allowing a scribe line previously formed on the glass laminate substrate to be polished in the thickness direction with the progress of chemical polishing of the glass laminate substrate.

11. The production method according to claim 8, wherein the polishing processing is performed by polishing the substrate cell in a state where the entire surface of the substrate cell is exposed.

12. The production method according to claim 8, wherein the polishing processing is performed by selectively polishing only the peripheral end face of the substrate cell in a state where the front and back faces of the substrate cell are covered with a masking material.

13. A method for producing the display device according to claim 1, comprising:

a first step in which when a glass laminate substrate, in which two or more display regions are provided between a first glass plate to be exposed to a user and a second glass plate not to be exposed to a user, has a thickness larger than a final thickness by 80 to 200 $\mu$m, a cut line is formed in the outer surface of the second glass plate; a second step in which in a state where the periphery of the glass laminate substrate is sealed, the glass laminate substrate is chemically polished until the thickness of the glass laminate substrate is reduced to a final thickness while the cut line is also chemically polished; and a third step in which a load is applied to the cut line from the outer surface side of the first glass plate to form a glass torn surface to separate the glass laminate substrate into substrate cells each having the display region by cutting, wherein the first to third steps are performed in this order.

Fig. 1

> Polishing method in which a substrate cell is additionally polished in a state where the entire surface thereof is exposed

(a)
Substrate cell separated from a glass laminate substrate having a thickness larger than a target thickness T by cutting

T+α

Polish the entire substrate cell

(b)
Substrate cell having a target thickness T

T

Fig. 2

> Polishing method in which a substrate cell is polished in a state where only the front and black faces of the substrate cell are covered with a masking material

(a)
Substrate cell having a target thickness T

T    Cover the front and back faces of a substrate cell, separated from a glass laminate substrate by cutting, with a masking material

Polish the peripheral end face of the substrate cell

(b)
Finally, remove the masking material from the front and back faces

T

Fig. 3

Polishing method in which a substrate cell is polished in a state where only the
peripheral end face of the substrate cell is covered with a masking material

(a)

Substrate cell separated from a
glass laminate substrate having a
thickness larger than a target
thickness T by cutting

$T + \beta$   Cover the peripheral end face of the substrate cell,
separated from the glass laminate substrate by
cutting, with a masking material

Polish the front and back faces of the substrate cell

(b)

Remove the masking material from
the peripheral end face

$T + \alpha$

Polish the entire substrate cell until the thickness of the
substrate cell is reduced to a target thickness T

(c)
Substrate cell having
a target thickness T

T

Fig. 4

r: pseudo-radius of curvature

surface of glass substrate

r

boundary

starting point of curvature

flat surface

Fig. 5

short peripheral end face

CF-side glass substrate

long peripheral
end face

TFT-side glass
substrate

masking material ▨

terminal portion

Fig. 6

②                    ①

④                    ③

⑥                    ⑤

Fig. 7

plan view

side view

▦···CF substrate   ■···TFT substrate   ───···measurement range

**Fig. 8**

objective lens ×10

objective lens ×150

objective lens ×50

Profile of cur surface
×10 (upper left)  ×50 (lower left)  ×150 (upper right)

**Fig. 9**

objective lens ×150

objective lens ×150

- ... region for calculating surface area/area
- ... adhered foreign matter
- ... projection

Profile of cut surface and region for calculating surface area/area  ×150

Case where no adhered foreign matter and projection are observed (left)

Case where adhered foreign matter is observed (right)

range of the region for calculating surface area/area
X···0.075~0.085mm
Y···0.040~0.050mm

range of the region for calculating surface area/area
X···0.030~0.085mm
Y···0.020~0.050mm

# Fig. 10

T(0,0) X ——→ j     T(0,n-1)

Y

i

h

v

T(i,j)

X

Y

T(m-1,0)     T(m-1,n-1)

(a) plan view of measurement region

T(i,j)

T(i,j+1)

T(i,j-1)

T(i-1,j)

T(i,j)

T(i+1,j)

h

v

(b) cross section in X-direction

(c) cross section in Y-direction

total sum of the areas of side wall surfaces calculated in X-direction

$$Sv = \sum_{i=0}^{m-1} \sum_{j=1}^{n-1} \left| T(i,j) - T(i,j-1) \right| * v$$

------- (formula 3)

total sum of the areas of side wall surfaces calculated in Y-direction

$$Sh = \sum_{j=0}^{n-1} \sum_{i=1}^{m-1} \left| T(i,j) - T(i-1,j) \right| * h$$

------- (formula 6)

total sum So of the areas of top surfaces

flat reference area $So = v * h * (n * m)$

judgment area = So + Sv + Sh

area ratio = (So + Sv + Sh)/So

Fig. 11

load application direction

A panel is set in such a manner that a measurement region (width: 0.09 mm) is located at the middle position between fulcrums.

Distance between fulcrums in a four-point bending test machine (left) and panel setting method (right)

Fig. 12

| | panel number | measurement point | surface area ($\mu$m2) | area ($\mu$m2) | surface area/area ③(right) ④(left) | surface area/area average | polishing amount of peripheral end face ($\mu$m) ③(right) ④(left) | average polishing amount of peripheral end face ($\mu$m) ①~⑥ | maximum load (N) | four-point bending strength (MPa) | |
|---|---|---|---|---|---|---|---|---|---|---|---|
| a | 1 | ③ | 3368.61 | 2703.54 | 1.246 | 1.294 | 19 | 17 | 184 | 131.43 | a |
| | | ④ | 2096.76 | 1562.41 | 1.342 | | 15 | | | | |
| | 2 | ③ | 3627.93 | 2429.96 | 1.493 | 1.392 | 19 | 19 | 89 | 63.57 | |
| | | ④ | 3343.84 | 2590.12 | 1.291 | | 17 | | | | |
| | 3 | ③ | 1863.95 | 1520.35 | 1.226 | 1.256 | 20 | 21 | 151 | 107.86 | |
| | | ④ | 2846.91 | 2213.77 | 1.286 | | 16 | | | | |
| b | 4 | ③ | 4069.61 | 3669.62 | 1.109 | 1.118 | 30 | 29 | 178 | 127.14 | b |
| | | ④ | 3419.76 | 3034.39 | 1.127 | | 27 | | | | |
| | 5 | ③ | 3064.19 | 2898.95 | 1.057 | 1.123 | 31 | 30 | 211 | 150.71 | |
| | | ④ | 2736.09 | 2301.17 | 1.189 | | 28 | | | | |
| | 6 | ③ | 1367.69 | 1121.98 | 1.219 | 1.131 | 39 | 33 | 212 | 151.43 | |
| | | ④ | 3142.91 | 3013.34 | 1.043 | | 38 | | | | |
| c | 7 | ③ | 2769.14 | 2533.52 | 1.093 | 1.064 | 43 | 45 | 163 | 116.43 | c |
| | | ④ | 3408.56 | 3293.29 | 1.035 | | 51 | | | | |
| | 8 | ③ | 3195.66 | 2967.19 | 1.077 | 1.082 | 50 | 46 | 294 | 210.00 | |
| | | ④ | 2934.61 | 2699.73 | 1.087 | | 36 | | | | |
| | 9 | ③ | 4027.19 | 3777.85 | 1.066 | 1.112 | 49 | 4 | 274 | 195.71 | |
| | | ④ | 3617.64 | 3124.04 | 1.158 | | 41 | | | | |
| d | 10 | ③ | 2731.67 | 2652.11 | 1.03 | 1.032 | 54 | 57 | 235 | 167.60 | d |
| | | ④ | 1864.97 | 1803.65 | 1.034 | | 61 | | | | |
| | 11 | ③ | 1937.92 | 1872.39 | 1.035 | 1.071 | 54 | 61 | 273 | 195.00 | |
| | | ④ | 3396.41 | 3068.12 | 1.107 | | 68 | | | | |
| | 12 | ③ | 1934.67 | 1849.59 | 1.046 | 1.041 | 66 | 63 | 289 | 206.43 | |
| | | ④ | 2046.91 | 1975.78 | 1.036 | | 59 | | | | |

Fig. 13

| panel number | panel number | measurement point | surface area (μm2) | area (μm2) | surface area/area ③(right)④(left) | surface area/area average | polishing amount of peripheral end face (μm) ③(right)④(left) | average polishing amount of peripheral end face (μm) ①~⑥ | maximum load (N) | four-point bending strength (MPa) | |
|---|---|---|---|---|---|---|---|---|---|---|---|
| | 13 | ③ | 2934.68 | 2824.52 | 1.039 | 1.042 | 104 | 92 | 245 | 175.00 | |
| | | ④ | 3946.21 | 3776.28 | 1.045 | | 90 | | | | |
| e | 14 | ③ | 1637.62 | 1558.15 | 1.051 | 1.062 | 94 | 97 | 272 | 194.29 | e |
| | | ④ | 2063.88 | 1923.47 | 1.073 | | 101 | | | | |
| | 15 | ③ | 2736.16 | 2600.91 | 1.052 | 1.034 | 96 | 98 | 248 | 177.14 | |
| | | ④ | 1264.93 | 1245.01 | 1.016 | | 96 | | | | |
| | 16 | ③ | 2934.63 | 2771.13 | 1.059 | 1.062 | 124 | 118 | 283 | 202.14 | |
| | | ④ | 2439.62 | 2290.72 | 1.065 | | 119 | | | | |
| f | 17 | ③ | 1436.93 | 1417.09 | 1.014 | 1.025 | 107 | 120 | 301 | 215.00 | f |
| | | ④ | 2793.63 | 2696.55 | 1.036 | | 126 | | | | |
| | 18 | ③ | 3659.14 | 3587.39 | 1.02 | 1.018 | 117 | 121 | 258 | 184.29 | |
| | | ④ | 2439.66 | 2401.24 | 1.016 | | 116 | | | | |
| | 19 | ③ | 4032.94 | 3801.07 | 1.061 | 1.051 | 149 | 158 | 269 | 192.14 | |
| | | ④ | 3267.53 | 3138.84 | 1.041 | | 164 | | | | |
| g | 20 | ③ | 2934.06 | 2851.37 | 1.029 | 1.035 | 166 | 160 | 284 | 202.86 | g |
| | | ④ | 3463.97 | 3327.54 | 1.041 | | 169 | | | | |
| | 21 | ③ | 2937.16 | 2854.38 | 1.029 | 1.031 | 159 | 162 | 299 | 213.57 | |
| | | ④ | 3691.75 | 3573.81 | 1.033 | | 158 | | | | |
| | 22 | ③ | 3529.46 | 3429.99 | 1.029 | 1.024 | 191 | 178 | 292 | 208.57 | |
| | | ④ | 2267.92 | 2225.63 | 1.019 | | 169 | | | | |
| h | 23 | ③ | 938.64 | 929.35 | 1.01 | 1.009 | 173 | 180 | 279 | 19.29 | h |
| | | ④ | 1163.75 | 1154.51 | 1.008 | | 181 | | | | |
| | 24 | ③ | 4639.65 | 4348.31 | 1.067 | 1.09 | 192 | 183 | 266 | 190.00 | |
| | | ④ | 2937.61 | 2639.36 | 1.113 | | 181 | | | | |

Fig. 14

| polishing amount of peripheral end face (target value) μm | polishing amount of peripheral end face (average of measured values) μm | area ratio | maximum load N | four-point bending strength MPa |
|---|---|---|---|---|
| | 0 | 1.423 | 109.67 | 78.34 |
| 20±3 | 19.0 | 1.314 | 141.33 | 100.95 |
| 30±3 | 30.7 | 1.124 | 200.33 | 143.09 |
| 45±3 | 46.0 | 1.086 | 243.67 | 174.05 |
| 60±3 | 60.3 | 1.048 | 265.67 | 189.76 |
| 95±3 | 95.7 | 1.046 | 255.00 | 182.14 |
| 120±3 | 119.7 | 1.035 | 280.67 | 200.48 |
| 160±3 | 160.0 | 1.039 | 284.00 | 202.86 |
| 180±3 | 180.3 | 1.041 | 279.00 | 199.29 |

Fig. 15

(a) relationship between polishing amount
and four-point bending strength

(b) relationship between polishing amount
and maximum load

(c) relationship between area ratio
and four-point bending strength

(d) relationship between area ratio
and maximum load

Fig. 16

(a) first step

2

1A    1A    1A

T + α

1A    1A    1A

GL2
GL1 } 1

(b) second step ↓

T

(c) third step

GL2
GL1

T

1A

load ⇑

GL2
GL2 not to be exposed to a user

GL1
GL1 to be exposed to a user

**INTERNATIONAL SEARCH REPORT**

| | International application No. |
|---|---|
| | PCT/JP2008/061209 |

A. CLASSIFICATION OF SUBJECT MATTER
*G02F1/1333*(2006.01)i, *G02F1/13*(2006.01)i, *G09F9/00*(2006.01)i

According to International Patent Classification (IPC) or to both national classification and IPC

B. FIELDS SEARCHED

Minimum documentation searched (classification system followed by classification symbols)
G02F1/1333, G02F1/13, G09F9/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2005-61982 A  (Nishiyama Sutenresu Kemikaru Kabushiki Kaisha),<br>10 March, 2005 (10.03.05),<br>Full text; all drawings<br>(Family: none) | 1-7<br>8-13 |
| A | JP 2005-283693 A  (Sony Corp.),<br>13 October, 2005 (13.10.05),<br>Par. Nos. [0032] to [0033]<br>(Family: none) | 1-13 |
| A | JP 2001-281650 A  (Matsushita Electric Industrial Co., Ltd.),<br>10 October, 2001 (10.10.01),<br>Par. Nos. [0013] to [0015]<br>(Family: none) | 1-13 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>01 September, 2008 (01.09.08) | Date of mailing of the international search report<br>09 September, 2008 (09.09.08) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 161 612 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004307318 A